# EUROPÄISCHE PATENTANMELDUNG

(11) **EP 3 435 030 A1**
(43) Veröffentlichungstag der Anmeldung: **30.01.2019**
(21) Anmeldenummer: 18184089.3
(22) Anmeldetag: 18.07.2018
(51) Int. Cl.: G01B 11/24, B64C 39/02

(54) **VERFAHREN ZUR ERSTELLUNG EINES 3D-MODELLS VON EINEM OBJEKT**

(30) Priorität: 27.07.2017 DE 102017117049
(71) Anmelder: Testo SE & Co. KGaA, 79853 Lenzkirch (DE)
(72) Erfinder: Evers-Senne, Jan-Friso, 79822 Titisee-Neustadt (DE); Zahn, Patrick, 79822 Titisee-Neustadt (DE)
(74) Vertreter: Mertzlufft-Paufler, Cornelius

(57) **Zusammenfassung**

Verfahren zur Erstellung eines 3D-Modells von einem Objekt (1), bei dem mit einem Kopter (2) mit wenigstens einer Bildaufnahmevorrichtung (3) von dem Objekt (1) mehrere sich zumindest teilweise überdeckende Bilder aufgenommen werden und daraus das 3D-Modell berechnet wird, wobei der Kopter (2) mit wenigstens einem Abstandssensor (4) den Abstand zum Objekt (1) fortlaufend misst und in einem vorgegebenen Abstand (7) das Objekt (1) selbsttätig abfliegt und das Abfliegen beendet wird, wenn das Objekt (1) vollständig aufgenommen ist. (Fig. 1)

## Beschreibung

Die Erfindung beschreibt ein Verfahren zur Erstellung eines 3D-Modells von einem Objekt, bei dem mehrere Bilder von dem Objekt aus unterschiedlichen Aufnahmeposen aufgenommen werden und daraus das 3D-Modell berechnet wird.

Zur Berechnung von 3D-Modellen aus einzelnen Bildern sind mehrere Verfahren bekannt. Wichtig dabei ist, dass sich die Bilder soweit überdecken, dass einzelne Elemente oder Merkmale in mehreren Bildern identifiziert und zugeordnet werden können.

Es hat sich herausgestellt, dass bei der Berechnung von 3D-Modellen zu größeren Objekten häufig die Schwierigkeit darin besteht, Bilder in schwer zugänglicher Höhe zu erstellen. Beispielsweise wenn eine Fassade eines Hochhauses modelliert werden soll.

Es ist bekannt, dazu sogenannte Kopter einzusetzen, die mit wenigstens einer Kamera ausgestattet sind. Hierbei bereitet zusätzliche Schwierigkeiten, dass vorhandene Kopter in der Regel an schwer zugänglichen Stellen nicht einsetzbar sind, da zum einen der Benutzer eine spezielle Qualifikation vorweisen muss und da zum anderen der Einsatz von Koptern gerade in besiedelten Gebieten strengen Auflagen unterliegt.

Beispielsweise ist es bekannt, dass ein definierter Abstand etwa zu Straßen oder sonstigen Verkehrswegen eingehalten werden muss, was die Untersuchung von vielen Gebäuden, die in der Nähe dieser Verkehrswege angeordnet sind, erschwert oder verhindert.

Aufgabe der Erfindung ist es ein Verfahren und eine Vorrichtung zur Erstellung eines 3D-Modells von einem Objekt zu schaffen, die auch die Vermessung von großen Objekten auf einfache und sichere Weise erlauben.

Diese Aufgabe wird erfindungsgemäß durch ein Verfahren nach Anspruch 1 und eine Vorrichtung nach Anspruch 16 gelöst.

Insbesondere ist das erfindungsgemäße Verfahren somit dadurch gekennzeichnet, dass ein Kopter mit wenigstens einer Bildaufnahmevorrichtung das Objekt selbsttätig erfasst und und - vorzugsweise in einem vorgegebenen Abstand - das Objekt selbsttätig abfliegt und sich zumindest teilweise überdeckende Bilder des Objektes aufnimmt. Der Kopter kann dabei als ein Aufmaßgerät ausgebildet sein oder er kann Teil eines Aufmaßgeräts sein, das zusätzlich noch eine stationäre Einheit umfasst.

Dadurch, dass der Kopter das Objekt in einem vorgegebenen Abstand abfliegt, ist auch der Einsatz in schwer zugänglichen Positionen und in großen Höhen möglich. Die Bildaufnahmevorrichtung ist dann vorzugsweise so eingerichtet, dass sie Bilder aufnimmt, die sich zumindest teilweise überdecken. So ist sichergestellt, dass Bildmerkmale zur Zuordnung in mehreren Bildern identifizierbar sind.

Besonders vorteilhaft ist es, wenn der Kopter den Abstand zum Objekt und/oder den Verlauf des Objekts fortlaufend bestimmt und den vorgegebenen Abstand selbsttätig einhält. Dabei kann der Kopter einen vorgegebenen Mindest- und/oder einen vorgegebenen Maximalabstand überwachen und einhalten. Insbesondere vorteilhaft kann der Abstand in Abhängigkeit der Flughöhe und/oder der Fluggeschwindigkeit verändert werden.

Dies hat den Vorteil, dass der Kopter den Abstand praktisch autonom einhält, so dass er auch in sehr unübersichtlichen Situationen oder in großen Höhen einsetzbar ist. Dies könnte auch dazu führen, dass für den Betrieb des Kopters in eigentlich gesperrten Bereichen Ausnahmegenehmigungen erhältlich sind.

Hier oder allgemein kann vorgesehen sein, dass der Kopter das zu erfassende Objekt und die Objektgrenzen selbst erkennt. Soll beispielsweise eine Gebäudefassade erfasst werden, kann die Objektgrenze die Ecke des Gebäudes sein, an der die Fassade in dieser Ausrichtung endet.

Er fliegt dabei im vorgegebenen Abstand das Objekt zunächst in einer Richtung ab, bis er eine Objektgrenze erkennt. Hier kann er die Höhe und die Richtung wechseln bis er erneut an eine Objektgrenze stößt.

In einer vorteilhaften Ausführung der Erfindung ist der Kopter so eingerichtet, dass er das Objekt entlang einer vorher festgelegten Objektkontur oder eines vorher festgelegten Pfads abfliegt. Dazu kann beispielsweise anhand eines Bauplans oder dergleichen eine Flugroute als Pfad festgelegt werden. Diese kann in dem Kopter oder einer Steuervorrichtung hinterlegt werden. Der Kopter fliegt nach dem Start dann diesen Pfad entlang des Objekts ab, wobei er wie oben beschrieben den Abstand zum Objekt selbsttätig einhält. Es ist daher nur notwendig den Pfad zweidimensional in der zu erfassenden Ebene festzulegen.

In einer bevorzugten Ausführung der Erfindung ist der Kopter so eingerichtet, dass das Abfliegen beendet wird, wenn das Objekt vollständig aufgenommen ist. Somit ist eine vollautomatische Durchführung einer Datenerfassung für eine Berechnung eines 3D-Modells des Objektes erreichbar.

Insbesondere vorteilhaft ist es, wenn der Kopter das Objekt in horizontaler und/oder vertikaler Richtung zeilen- oder spaltenweise abfliegt. Dadurch erfolgt auf einfache Weise die vollständige Erfassung des Objekts. Darüber hinaus ist dadurch eine ausreichende Überdeckung der Bilder einfach zu erzielen.

Die Erfassung endet beispielsweise dann, wenn das gesamte Objekt erfasst ist. Hier erfolgt die Erfassung vollautomatisch und autonom, so dass im Prinzip keine Benutzerinteraktion notwendig ist.

Insbesondere kann der Kopter bei diesem Verfahren von einem beliebigen Startpunkt gestartet werden. Er kann seinen Einsatzort dann beispielsweise per GPS oder andere Ortungsverfahren selbsttätig finden.

Besonders vorteilhaft ist es, wenn die Erfassung des Objekts durch Abstandssensoren erfolgt. Über den Abstandssensor, der beispielsweise ein bekannter Laser- oder Ultraschallabstandssensor sein kann, kann eine einfache Messung des Abstands erfolgen, so dass der Kopter den Abstand sehr genau einhalten kann.

Alternativ oder zusätzlich zu einem dedizierten Abstandssensor kann auch aus den aufgenommenen Bilddaten eine Abstandsinformation gewonnen werden, beispielsweise durch ein Structure-from-motion Verfahren.

Unabhängig von der verwendeten Abstandsbestimmung ist es dadurch möglich auf Abstandsänderungen, etwa bei aus dem Objekt hervorstehenden Hindernissen, schnell zu reagieren. Dies kann benutzt werden, um einen Abstand zu einem Objekt zu vergrößern, wenn ein derartiges Hindernis, beispielsweise ein Balkon oder dergleichen, detektiert wird.

Es kann vorteilhaft sein, wenn der Kopter mit schräger Hauptblickrichtung auf das Objekt betrieben wird, um den Weg seiner Route vorauszuschauen. Dabei kann ein Abstandssensor etwas in Flugrichtung geneigt angeordnet sein. Da die Flugrichtung wechselt, ist es insbesondere vorteilhaft, wenn wenigstens zwei Abstandssensoren vorhanden sind, die jeweils in eine Flugrichtung vorausschauen. Auch die Bildaufnahmevorrichtung, insbesondere die Kamera, kann in dieser Richtung geneigt sein. Alternativ kann die Kamera und/oder der Abstandssensor auch beweglich angeordnet sein, so dass diese jeweils in Flugrichtung ausgerichtet werden können.

Dadurch wird insbesondere die Erkennung von in die Flugbahn hineinragenden Hindernissen verbessert.

Durch ungünstige Umgebungsbedingungen oder Objekteigenschaften, beispielsweise durch Reflexionen, kann es vorkommen, dass über die Sensorik keine ausreichenden Informationen gewonnen werden können. In diesem Fall kann es vorteilhaft sein, wenn der Kopter durch von der Flugbahn abweichende Flugbewegungen die Erfassung des Objekts unterstützt. Dabei kann der Kopter beispielsweise Roll-, Nick- oder Gierbewegungen ausführen, um so die Erfassung durch die Sensoren zu erleichtern oder zu ermöglichen.

Zur besseren Erfassung der Objektgrenzen sowie zur Erkennung von Hindernissen in der Flugbahn kann der Kopter seitlich orientierte Abstandssensoren aufweisen. Dadurch kann auch eine Kollision bei einer horizontalen Bewegung quer zu Hauptblickrichtung vermieden werden.

Bei einer vorteilhaften Ausgestaltung kann vorgesehen sein, dass der Kopter zur Erfassung wenigstens eines durch eine Gebäudewand vorgegebenen geometrischen Primitivs eingerichtet ist. Dies kann beispielsweise durch Einpassen in eine Wolke von Messpunkten erfolgen. Hierbei können die Messpunkte beispielsweise mit einem stereoskopischen Abstandssensor oder einem Scanner oder allgemein einem 2D-Abstandssensor, mit dem der Kopter ausgerüstet sein kann und/oder mit dem eine ortsabhängige und/oder blickwinkelabhängige Abstandsinformation gewinnbar ist, aufgenommen sein. Es ist somit ein angenähertes Abbild des Objekts oder von dessen Kontur gewinnbar und für eine Flugsteuerung des Kopters bereitstellbar.

Vorzugsweise ist das wenigstens eine Primitiv eine Ebene oder eine Zylinderwand. Somit lassen sich viele Gebäude durch eine passende Anzahl und Art von geometrischen Primitiven annähern.

Hierbei kann vorgesehen sein, dass der Kopter zur Berechnung einer Flugbahn, beispielsweise der bereits erwähnten Flugbahn, des Kopters in Bezug auf das wenigstens eine geometrische Primitiv eingerichtet ist. Somit ist ein selbsttätiges Abfliegen der Oberfläche der Gebäudewand ausführbar, ohne dass Abstandssensoren ständig aktiv sein müssen.

Problematisch ist auch der Moment des Aufsteigens, da der Kopter von unten an ein Hindernis stoßen könnte. Hier erschweren die Rotoren eine direkte Abstandsmessung, insbesondere dann, wenn der Kopter ein kompaktes Baumaß aufweist.

Für eine automatische Erfassung eines Objekts ist es daher vorteilhaft wenn der Kopter auch einen Abstandssensor nach oben aufweist. Dies kann beispielsweise durch entsprechende Anordnung der Rotoren derart, dass zwischen den Rotoren Platz gelassen ist oder auch durch Anordnung eines Sensors oberhalb der Ebene, in der die Rotoren rotieren, erreichbar sein.

In einer vorteilhaften Ausführung der Erfindung erfolgt eine Warnung des Benutzers, wenn der Kopter einen festgelegten Mindestabstand zum Objekt unterschreitet und/oder wenn der Kopter einen festgelegten Maximalabstand zum Objekt überschreitet. Da der Kopter seinen Abstand zum Objekt erfindungsgemäß selbsttätig einhält kann ein Unter- oder Überschreiten dieses Abstands auf einen gravierenden Fehler hindeuten. Durch die Warnung erhält der Benutzer einen Hinweis so dass die Benutzung des Kopters insgesamt sicherer wird. Bei der Warnung kann eine Fehlertoleranz des vorgegebenen Abstands berücksichtigt werden, so dass eine gewisse Abweichung erlaubt ist.

In einer vorteilhaften Weiterbildung der Erfindung werden die Bilder in einer am Kopter angeordneten Bildaufnahmevorrichtung aufgenommen. Diese Bildaufnahmevorrichtung kann beispielsweise eine Digitalkamera sein. Die aufgenommenen Bilder können innerhalb des Kopters in einem Bildspeicher gespeichert werden oder noch während der Erfassung an eine Kontroll- oder Basiseinheit gesendet werden.

In einer besonders zweckmäßigen Ausführung der Erfindung wird ein Bild- oder Videostrom der Bildaufnahmevorrichtung zur Überwachung der Arbeit des Kopters an eine Empfangseinheit übertragen. Um die Datenmenge zu reduzieren kann insbesondere ein Videodatenstrom komprimiert werden. Ein solches Livebild ermöglicht einem Benutzer die Kontrolle der Erfassung auch dann, wenn der Kopter außerhalb des Sichtbereichs des Benutzers fliegt.

In einer besonders vorteilhaften Ausführung der Erfindung besitzt die Aufnahmevorrichtung eine Fischaugenkamera. Dies hat den Vorteil, dass mit einem Bild bereits ein großer Bildwinkel erfasst wird. Dies kann zum einen dazu genutzt werden, um mit möglichst wenigen Bildern ein Modell zu erstellen. Es kann aber auch dazu führen, dass der notwendige Abstand zum Objekt kleiner gewählt werden kann. Dadurch kann die Sicherheit beim Flugbetrieb des Kopters erhöht werden, da nicht so weit in den freien Luftraum vor einem Gebäude geflogen werden muss. Andererseits kann auch in sehr engen Straßen oder bei wenig Raum vor einem Gebäude noch sinnvolle Bildaufnahmen erzeugt werden.

In der Regel kann das 3D-Modell anhand der aufgenommenen Bilddaten und einer eventuell vorhandenen Abstandsmessung korrekt skaliert werden.
Es kann jedoch vorteilhaft sein, wenn an dem Objekt zunächst ein Marker zur Unterstützung der Abstandsmessung und der Skalierung des Objekts angeordnet wird. Aufgrund der bekannten Abmessungen des Markers, beispielsweise eine Markertafel mit bekannten Strukturen, kann das Bild oder die Bilder, auf denen der Marker sichtbar ist, zur Bestimmung der Skalierung verwendet werden.

Insbesondere hilfreich ist es, wenn die Abstandsinformation oder Skaleninformation aus einem Bild mit Marker auf andere Bilder ohne Marker übertragen wird.

Dabei kann es hilfreich sein, wenn in den aufgenommenen Bildern robuste und präzise Bildmerkmale identifiziert werden, die eine einfache Registrierung der einzelnen Bilder zueinander erlauben.

Die Bilder können dabei in vorgegebenen und/oder regelmäßigen Abständen oder Intervallen aufgenommen werden.

In einer vorteilhaften Ausführung der Erfindung wird die Bildwiederhol- oder Bildaufnahmerate variiert. Dies kann in Abhängigkeit des Bildwinkels, des Abstands zum Objekt, der Fluggeschwindigkeit und/oder weiteren Parametern bestimmt werden.

Insbesondere vorteilhaft ist es, wenn die Bildaufnahmerate in Abhängigkeit von der Erstellung des 3D-Modells variiert wird, beispielsweise um eine gewünschte Genauigkeit oder Abdeckung an einer gewünschten Stelle zu verbessern.

Dazu ist es vorteilhaft, wenn die Berechnung des 3D-Modells zeitnah erfolgt, so dass gegebenenfalls weitere Bilder an bestimmten Stellen aufgenommen werden können. In einer Ausführung der Erfindung kann der Kopter dazu ein Objekt mit einem vorgegebenen groben Aufnahmeraster abfliegen. Danach kann aufgrund dieser Bilddaten ein 3D-Modell erstellt werden. Schließlich kann in einem zweiten Flug an den Bereichen, in denen die Genauigkeit des Modells nicht ausreicht, weitere Bilder aufgenommen werden.

Insbesondere vorteilhaft ist es jedoch, wenn die Berechnung des 3D-Modells in Echtzeit erfolgt. Dadurch kann sofort erkannt werden ob an einer Stelle des Objekts weitere Bilder in engerem Raster notwendig sind. Die Berechnung des 3D-Modells kann insbesondere durch Reduzierung der Bilder auf Ecken und Kanten beschleunig werden. Dadurch kann die Berechnung beispielsweise auf wenig leistungsfähiger Hardware im Kopter selbst erfolgen, so dass eine Übertragung der Bilddaten an eine stationäre Berechnungseinheit nicht notwendig ist.

Zur Erfindung gehört auch ein Aufmaßgerät zur Vermessung eines Objekts, mit wenigstens einem Kopter, an dem wenigstens eine Bildaufnahmevorrichtung zur Aufnahme von Bildern des Objekts angeordnet ist, dadurch gekennzeichnet, dass der Kopter wenigstens eine Vorrichtung zur Bestimmung des Abstands zu einem Objekt aufweist und eine Steuereinheit, die zur Durchführung eines erfindungsgemäßen Verfahrens nach ausgebildet ist.

Besonders Zweckmäßig ist es, wenn die Bildaufnahmevorrichtung eine Fischaugenoptik aufweist.

Vorteilhaft ist es auch, wenn der Kopter einen Abstandssensor nach oben aufweist. Dadurch wird auch das Erkennen von Hindernissen oberhalb des Kopters möglich, so dass beim Aufsteigen in vertikaler Richtung etwaige Kollisionen verhindert werden können.

Dies kann insbesondere dadurch erreicht werden, dass die Rotoren so angeordnet sind, dass ein Sichtfenster für den Abstandssensor zwischen den Rotoren vorhanden ist oder der Sensor oberhalb der Rotorenebene angeordnet ist.

Die Erfindung ist nachfolgend anhand eines Ausführungsbeispiels mit Bezug auf die beiliegenden Zeichnungen näher erläutert.

Es zeigt:
Fig. 1 eine schematische Ansicht eines erfindungsgemäßen Aufmasßgeräts mit einem Quadkopter zu verschiedenen Zeiten eines Messvorgangs, und
Fig. 2 eine schematische Darstellung einer Flugroute eines Kopters entlang eines Objekts.

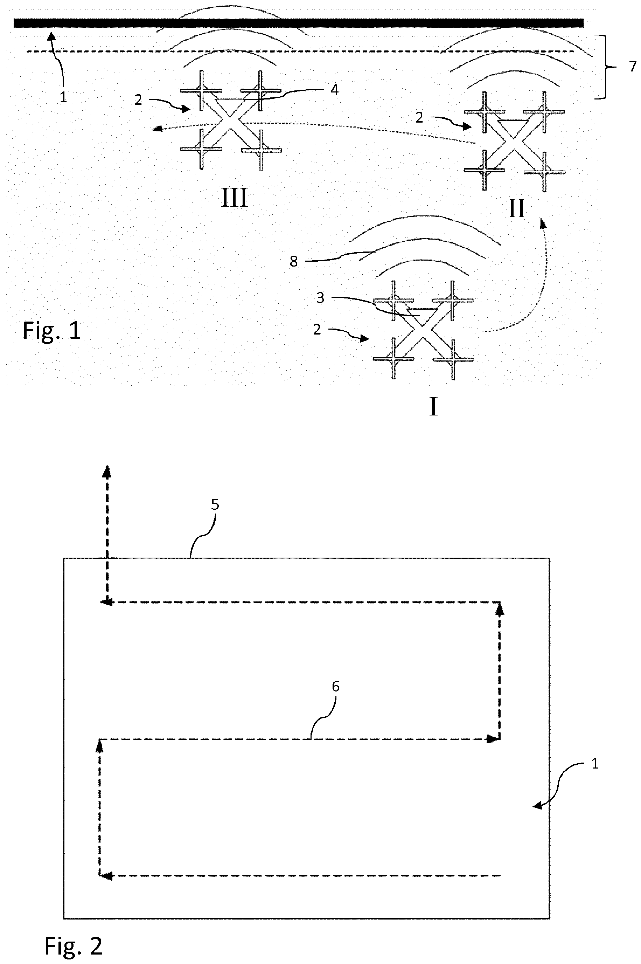

Die Fig. 1 zeigt schematisch in einer Aufsicht ein zu vermessendes Objekt, beispielsweise eine Fassade 1 eines Gebäudes. Im Bild steht die Fassade 1 senkrecht aus der Blattebene heraus.

Ein erfindungsgemäßes Aufmaßgerät 2 weist im Beispiel einen Quadkopter auf. Es kann jedoch auch ein beliebiges anderes Fluggerät oder Kopter, etwa ein Octakopter oder Hexakopter, eingesetzt werden.

Der Quadkopter 2 weist weiter eine Bildaufnahmevorrichtung 3 auf, die beispielsweise als Digitalkamera ausgebildet ist. Insbesondere weist die Kamera 3 ein Fischaugenobjektiv auf, um einen möglichst großen Bildwinkel zu erfassen.

Darüber hinaus besitzt der Quadkopter 2 wenigstens einen Abstandssensor 4, der senkrecht zur Propellerebene ausgerichtet ist und den Abstand vom Quadkopter 2 zur Fassade 1 bestimmt.

In Fig. 1 ist der Quadkopter zunächst in einer Startposition I gezeigt, in der der Abstandssensor 4 so ausgerichtet ist, dass er der Fassade 1 zugewandt ist. Im Bild steht er senkrecht zur Fassade 1, was jedoch nicht Voraussetzung ist. Wichtig ist, dass der Abstandssensor 4 die Fassade 1 erfassen kann.

Eine erste Ausführung des erfindungsgemäßen Verfahrens sieht nun vor, dass die Umrisse oder die Kontur 5 des Objekts, im Beispiel der Fassade 1, sowie eine Flugroute 6 vorab festgelegt wird. Der Quadkopter 2 wird dann nach dem Start von seiner Startposition I senkrecht auf die Fassade 1 zufliegen, bis der vorgegebene Abstand in einer Messposition II erreicht ist.

Danach fliegt der Quadkopter entlang der festgelegten Flugroute die Fassade ab, wobei Position III ein zeitlicher Ausschnitt darstellt. Dabei wird fortwährend oder in Intervallen der Abstand zur Fassade 1 gemessen und notfalls korrigiert. Das Abfliegen der Fassade 1 wird beendet wenn die gesamte Fassade 1 erfasst ist.

Eine zweite alternative Ausführung der Erfindung sieht vor, dass der Kopter 2 nach dem Start von der Startposition I zunächst bis auf den vorgegebenen Abstand auf die Fassade 1 zufliegt und dann in einer Richtung solange an der Fassade 1 entlang fliegt, bis durch den Abstandssensor 4 oder weitere Sensoren ein Ende der Fassade 1 erkannt wird. Danach ändert der Kopter 2 seine Höhe und fliegt in die entgegengesetzte Richtung bis auch hier das Ende der Fassade 1 erreicht ist. Eine entsprechende Flugroute 6 ist beispielhaft in Fig. 2 gezeigt. Wobei die in Fig. 2 gezeigte Flugroute 6 auch vorher festgelegt sein könnte wie oben beschrieben.

Der Vorteil bei der zweiten Ausführung ist jedoch, dass der Kopter 2 ein Objekt praktisch autonom und selbsttätig erfassen kann. Dabei ist es auch möglich eventuell vorherrschende Mindest- oder Maximalabstände zu beachten.

Der Kopter 2 kann bei einem weiteren Ausführungsbeispiel auch dazu eingerichtet sein, von der Fassade eine Reihe von Abstandsmesspunkten auszumessen. Somit kann der Kopter eine Punktwolke erhalten, in die er anschließend selbsttätig ein geometrisches Primitiv, beispielsweise einen Ausschnitt einer Ebene oder eines Zylindermantels, oder eine Mehrzahl solcher, unterschiedlicher Primitive einpasst. Der Kopter 2 kann nun eine Flugbahn 6 berechnen, die in einem definierten Abstand zu einer durch die geometrischen Primitive annähernd beschriebenen Oberfläche verläuft.

### Bezugszeichenliste

- 1: Objekt, Fassade
- 2: Aufmaßgerät, Kopter, insbesondere Quadkopter
- 3: Bildaufnahmevorrichtung, Kamera
- 4: Abstandssensor
- 5: Kontur
- 6: Flugroute, Flugbahn, Pfad
- 7: Abstand
- 8: Hauptblickrichtung

## Patentansprüche

1. Verfahren zur Erstellung eines 3D-Modells von einem Objekt (1), bei dem mehrere Bilder von dem Objekt (1) aus unterschiedlichen Aufnahmeposen aufgenommen werden und daraus das 3D-Modell berechnet wird, **dadurch gekennzeichnet, dass** ein Kopter (2) mit wenigstens einer Bildaufnahmevorrichtung (3) das Objekt (1) selbsttätig erfasst und vorzugsweise in einem vorgegebenen Abstand (7) das Objekt (1) selbsttätig abfliegt und sich zumindest teilweise überdeckende Bilder des Objektes (1) aufnimmt.

2. Verfahren nach Anspruch 1, **dadurch gekennzeichnet, dass** der Kopter (2) den Abstand (7) zum Objekt (1) und/oder den Verlauf des Objekts (1) fortlaufend bestimmt und den vorgegebenen Abstand (7) selbststätig einhält, insbesondere wobei der Kopter (2) von einem beliebigen Startpunkt (I) gestartet werden kann.

3. Verfahren nach Anspruch 1 oder 2, **dadurch gekennzeichnet, dass** der Kopter (2) das Objekt (1) entlang einer vorher festgelegten Objektkontur (5) und/oder eines vorher festgelegten Pfads (6) abfliegt.

4. Verfahren nach einem der Ansprüche 1 bis 3, **dadurch gekennzeichnet, dass** das Abfliegen beendet wird, wenn das Objekt (1) vollständig aufgenommen ist.

5. Verfahren nach einem der Ansprüche 1 bis 4, **dadurch gekennzeichnet, dass** die Bestimmung des Abstands des Kopters (2) zum Objekt (1) durch Abstandssensoren (4) und/oder durch Auswertung von aufgenommenen Bildern, insbesondere durch ein Structure-from-motion Verfahren, erfolgt.

6. Verfahren nach einem der Ansprüche 1 bis 5, **dadurch gekennzeichnet, dass** der Kopter (2) durch von der Flugbahn abweichende Flugbewegungen die Erfassung des Objekts (1) unterstützt.

7. Verfahren nach einem der Ansprüche 1 bis 6, **dadurch gekennzeichnet, dass** der Kopter (2) das Objekt (1) in horizontaler und/oder vertikaler Richtung zeilen- oder spaltenweise abfliegt.

8. Verfahren nach einem der Ansprüche 1 bis 7, **dadurch gekennzeichnet, dass** der Kopter (2) mit schräger Hauptblickrichtung (8) auf das Objekt (1) betrieben wird, um den Weg seiner Flugroute (6) vorauszuschauen, insbesondere um in die Flugbahn hineinragende Hindernisse zu erkennen.

9. Verfahren nach einem der Ansprüche 1 bis 8, **dadurch gekennzeichnet, dass** der Kopter (2) seitlich orientierte Abstandssensoren aufweist um eine Kollision bei einer horizontalen Bewegung quer zu Hauptblickrichtung (8) zu vermeiden.

10. Verfahren nach einem der Ansprüche 1 bis 9, **dadurch gekennzeichnet, dass** der Kopter zur Erfassung wenigstens eines durch eine Gebäudewand vorgegebenen geometrischen Primitivs, insbesondere einer Ebene oder einer Zylinderwand eingerichtet ist, insbesondere wobei der Kopter zur Berechnung der oder einer Flugbahn in Bezug auf das wenigstens eine geometrische Primitiv eingerichtet ist.

11. Verfahren nach einem der Ansprüche 1 bis 10, **dadurch gekennzeichnet, dass** die Bilder in einer am Kopter (2) angeordneten Bildaufnahmevorrichtung (3) aufgenommen werden und/oder dass ein, insbesondere komprimierter, Videostrom der Bildaufnahmevorrichtung (3) zur Überwachung der Arbeit des Kopters an eine Empfangseinheit übertragen wird.

12. Verfahren nach einem der Ansprüche 1 bis 11, **dadurch gekennzeichnet, dass** eine Warnung des Benutzers erfolgt, wenn der Kopter (2) einen festgelegten Mindestabstand zum Objekt (1) unterschreitet und/oder wenn der Kopter einen festgelegten Maximalabstand zum Objekt (1) überschreitet.

13. Verfahren nach einem der Ansprüche 1 bis 12, **dadurch gekennzeichnet, dass** an dem Objekt (1) zunächst ein Marker zur Unterstützung der Abstandsmessung und der Skalierung des Objekts (1) angeordnet wird und dass die Abstandsinformation oder Skaleninformation aus einem Bild mit Marker auf andere Bilder ohne Marker übertragen wird.

14. Verfahren nach einem der Ansprüche 1 bis 13, **dadurch gekennzeichnet, dass** die Bildwiederhol- oder Bildaufnahmerate variiert wird, insbesondere wobei die Bildaufnahmerate in Abhängigkeit von der Erstellung des 3D-Modells variiert wird, beispielsweise um eine gewünschte Genauigkeit oder Abdeckung an einer gewünschten Stelle zu verbessern.

15. Verfahren nach einem der Ansprüche 1 bis 14, **dadurch gekennzeichnet, dass** die Berechnung des 3D-Modells in Echtzeit erfolgt, insbesondere wobei zur Beschleunigung der Berechnung die Bilder auf Ecken und Kanten reduziert werden.

16. Aufmaßgerät zur Vermessung eines Objekts, mit wenigstens einem Kopter (2), an dem wenigstens eine Bildaufnahmevorrichtung (3) zur Aufnahme von Bildern des Objekts (1) angeordnet ist, **dadurch gekennzeichnet, dass** der Kopter wenigstens eine Vorrichtung zur Bestimmung des Abstands (7) zu einem Objekt (1) aufweist und eine Steuereinheit, die zur Durchführung eines Verfahrens nach einem der Ansprüche 1 bis 15 ausgebildet ist.

17. Aufmaßgerät nach Anspruch 16, **dadurch gekennzeichnet, dass** die Bildaufnahmevorrichtung eine Fischaugenoptik aufweist.

18. Aufmaßgerät nach Anspruch 16 oder 17, **dadurch gekennzeichnet, dass** der Kopter (2) einen Abstandssensor nach oben aufweist, insbesondere dass die Rotoren so angeordnet sind, dass ein Sichtfenster für den Abstandssensor zwischen den Rotoren vorhanden ist oder der Sensor oberhalb der Rotorenebene angeordnet ist.
